# EUROPÄISCHE PATENTSCHRIFT

(11) **EP 0 417 591 B1**
(45) Veröffentlichungstag und Bekanntmachung des Hinweises auf die Patenterteilung: **01.03.1995**
(21) Anmeldenummer: 90116884.9
(22) Anmeldetag: 03.09.1990
(51) Int. Cl.: B01D 8/00, B01D 5/00

(54) **Lösungsmittelkondensatoranordnung für eine Lösungsmittelrückgewinnungsanlage**
Solvent condenser for a solvent recuperation device
Dispositif de condenseur de solvant pour un dispositif de récupération de solvant

(30) Priorität: 11.09.1989 DE 3930239
(43) Veröffentlichungstag der Anmeldung: 20.03.1991
(73) Patentinhaber: HERCO-KÜHLTECHNIK HERMANNS & CO. GMBH, D-46474 Wesel (DE); AIR PRODUCTS GMBH WERK HATTINGEN, D-45527 Hattingen (DE)
(72) Erfinder: Karthaus, Michael, Dipl.-Ing., D-4040 Neuss (DE); Hermanns, Klaus, Dr. rer. nat., D-4224 Hünxe 2 (DE); Kusenberg, Gerhard, D-4230 Wesel (DE)
(74) Vertreter: Marx, Lothar, Dr.

(56) Entgegenhaltungen:
- EP-A- 0 275 472
- DE-A- 2 924 179
- DE-A- 3 414 246
- DE-A- 3 634 612
- DE-C- 2 337 055

## Beschreibung

Die Erfindung betrifft ein Verfahren zur Rückgewinnung eines Lösungsmittels sowie eine Lösungsmittelkondensatoranordnung für eine Lösungsmittelrückgewinnungsanlage.

Bei vielen industriellen Prozessen, beispielsweise beim Trocknen von Gegenständen wie Audio- oder Video-Bändern, entstehen Lösungsmitteldämpfe, die aufgefangen und rückgewonnen werden müssen, damit sie nicht in die Atmosphäre gelangen., sondern der Wiederverwendung zugeführt werden können. In dieser Rückgewinnungsanlage wird in der Regel außerdem noch das Inertgas, im allgemeinen Stickstoff, verarbeitet, das zur Abschirmung der Fertigungsanlage, wo die Lösungsmitteldämpfe entstehen, gegen die Umgebungsluft dient. Denn um das Austreten der Lösungsmitteldämpfe aus dieser Anlage zu vermeiden, sind alle Öffnungen, im allgemeinen der Einlaß und der Auslaß dieser Anlage, mit Schleusen versehen, die ständig mit dem Inertgas, insbesondere Stickstoff, gespült werden, um jeden Kontakt der Atmosphäre in der Anlage mit der Außenluft und damit insbesondere das Austreten von Lösungsmitteldämpfen zu verhindern.

Eine moderne Lösungsmittelrückgewinnungsanlage hat deshalb in der Regel zwei zum Teil voneinander unabhängige Kreisläufe, nämlich
einen Inertgaskreislauf, aus dem das Lösungsmittel auskondensiert wird, und
einem Tieftemperaturteil, mit dem die Schleusen der Fabrikationsanlage, beispielsweise eines Trockners, versorgt werden.

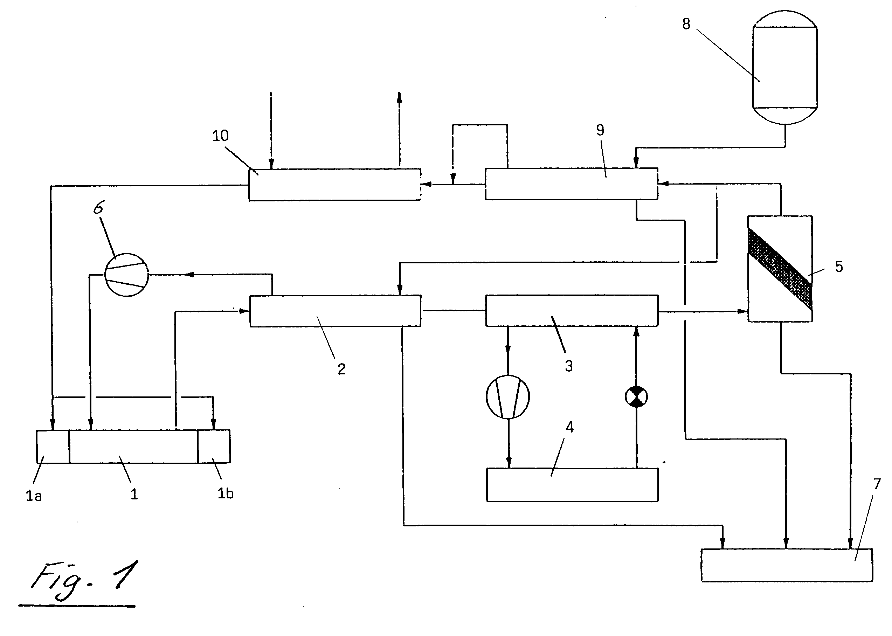

Der Grundaufbau einer solchen Rückgewinnungsanlage für die Entsorgung bzw. Versorgung eines Trockners ist aus Figur 1 ersichtlich. Der dort dargestellte Trockner wird kontinuierlich oder chargenweise mit den zu trocknenden Artikeln, beispielsweise Video- oder Audio-Bändern, beschickt und weist an seinem Einlaß und seinem Auslaß Schleusen 1a, 1b auf, die mit Stickstoff versorgt werden und deshalb einen Schutzvorhang zwischen der Lösungsmittelatmosphäre im Innern des Trockners 1 und der Umgebungsluft bilden.

Der im Trockner 1 anfallende, lösungsmittelbeladene Stickstoff wird einem Wärmetauscher 2 der Lösungsmittelrückgewinnungsanlage zugeführt, wo dieses Gasgemisch vorgekühlt wird. Hochsiedende Komponenten werden in dem Wärmetauscher 2 entsprechend der Dampfdruckkurve kondensiert. Außerdem dient der Wärmetauscher 2 noch zur Wärmerückgewinnung.

Das vorgekühlte und von hochsiedenden Komponenten befreite Gemisch Lösungsmittel/Stickstoff gelangt von dem Wärmetauscher 2 in einen Kondensator, in dem der Hauptanteil des Lösungsmittels gegen Fremdkälte kondensiert wird. Die Fremdkälte wird hierbei von dem Verdampfer 3 einer Kältemaschine 4 geliefert.

Von dem Verdampfer 3, der auch als Kondensator dient, gelangt das Zweiphasengemisch flüssiges Lösungsmittel/gereinigter Stickstoff in einen Lösungsmittelabscheider 5, wo das Lösungsmittel von dem Stickstoff getrennt wird; der Stickstoff strömt von dem Abscheider 5 zurück in den Wärmetauscher 2 und wird dort im Wärmeaustausch mit dem aus dem Trockner 1 abgezogenen Gasgemisch Lösungsmittel/Stickstoff erwärmt. Ein Ventilator 6 saugt den Stickstoff aus dem Wärmetauscher 2 ab und führt ihn zurück in den Trockner 1.

Das im Abscheider 5 angefallene, zurückgewonnene Lösungsmittel wird in einem Behälter 7 zwischengelagert und in der Regel mit einer Pumpe zum Tanklager für das Lösungsmittel zurückgepumpt (nicht dargestellt).

Damit in den Trockner 1 kein Sauerstoff einbrechen und das Lösungsmittel den Trockner 1 auch nicht verlassen kann, werden die Schleusen 1a, 1b des Trockners mit Stickstoff beaufschlagt, um in beiden Richtungen nach draußen vor die Schleusen nach innen in den Trockner 1 einen positiven Fluß zu erzeugen.

Der hierzu erforderliche Spülstickstoff wird teils der Kreislaufmenge und teils einem Tank 8 entnommen. Um den positiven Fluß von den Schleusen 1a, 1b in den Trockner 1 zu gewährleisten, wird dem Stickstoff-Kreislauf ständig hinter dem Abscheider 5 Stickstoff entzogen; dieser Entnahmestickstoff enthält jedoch entsprechend der Dampfdruckkurve noch soviel Lösungsmittel, daß dieses Gasgemisch noch nicht in die Umgebung abgeleitet werden darf. Deshalb wird dieses Gasgemisch in einem Tieftemperaturteil 9 stark unterkühlt und damit soweit vom Lösungsmittel gereinigt, bis der Lösungsmittelanteil dieses Gasgemisches unterhalb der gesetzlichen Werte liegt, so daß er zur Schleusenversorgung geeignet ist. Die hierzu erforderliche Kälte wird dem Stickstoff entnommen, der zusätzlich für die Schleusenspülung verwendet wird.

Von diesem Tieftemperaturteil gelangt der Stickstoff nach Erwärmung in einem weiteren Wärmetauscher 10 zu den Schleusen 1a, 1b.

Bei einer solchen Lösungsmittelrückgewinnungsanlage sind häufig Temperaturen von - 25 ° C und tiefer erforderlich, um die verwendeten Lösungsmittel zu kondensieren. Dabei können im als Lösungsmittelkondensator dienenden Verdampfer 3 der Kältemaschine 4 dann Schwierigkeiten auftreten, wenn ein Lösungsmittel mit hohem Schmelzpunkt oder ein Lösungsmittelgemisch kondensiert werden muß, das Komponenten mit hohem Schmelzpunkt enthält. Dies führt nämlich zur Sublimation der Anteile mit hohem Schmelzpunkt und damit zum Zuwachsen des Lösungsmittelkreislaufs im Verdampfer 3. Sehr häufig enthält das Lösungsmittel auch Wasser, das auf den kalten Flächen des Verdampfers 3 sublimiert und daher zur Vereisung des Verdampfers 3 führt.

Um bei einem Verfahren zur Rückgewinnung der in einem Benzin/Luft-Gemisch enthaltenen Kohlenwasserstoffe durch Kühlung des Benzin/Luft-Gemisches dem Vereisen eines Lösungsmittelkondensators entgegenzuwirken, ist aus der DE 23 37 055 C2 die Verwendung einer aus zwei Lösungsmittelkondensatoren bestehenden Kondensatoranordnung bekannt, deren Lösungsmittelkondensatoren jeweils im Wechsel betrieben werden. Wahrend in dem einen Kondensator Lösungsmittel kondensiert wird, wird der andere Kondensator abgetaut, indem die Zuführung des Kältemittels zu diesem Kondensator unterbrochen und dieser ungekühlte Kondensator weiterhin mit dem Benzin/Luft-Gemisch beaufschlagt wird, und zwar derart, daß dieses Gemisch zuerst durch diesen abtauenden und anschließend erst durch den im Wechsel dazu betriebenen Kondensator strömt. Bei Vereisung des betriebenen Kondensators wird dessen Kältemittelzufuhr unterbrochen und das Kältemittel dann dem zwischenzeitlich abgetauten Kondensator zugeführt. Gleichzeitig wird die Strömungsrichtung des Gemisches durch die beiden Kondensatoren umgekehrt. Die zum Kondensieren von Lösungsmitteln erforderliche Kälte wird durch ein in einem geschlossenen Kältekreislauf geführtes Kreislaufmedium, z.B. Propan, das in einer Kühlstation gekühlt und verflüssigt und entsprechend der gerade vorliegenden Schaltphase in den Rohrschlangen der Lösungsmittelkondensatoren verdampft wird, zur Verfügung gestellt. Die Lösungsmittelkondensatoren bilden die Verdampfer für das Kältemittel aus der Kühlstation.

Aus der EP 0 275 472 A3 ist ein Verfahren zum Entfernen von Verunreinigungen aus Abgasen durch Abkühlen des Abgases und dadurch erfolgende Auskondensation der Verunreinigungen in zwei Gruppen von umschaltbaren Wärmetauschern bekannt. Die Kältezufuhr erfolgt durch ein im Kreislauf mit Kreislaufgebläse geführtes gasförmiges Kühlmittel. Die auskondensierten Verunreinigungen werden nach jeder Umschaltung der Wärmeaustauschergruppen unter Ausnutzung des Wärmeinhalts des Rohgases abgetaut. Die beiden Kondensatorgruppen werden in drei Betriebsphasen betrieben, wobei in der zweiten Betriebsphase nur eine dieser beiden Gruppen und in der dritten Betriebsphase beide Gruppen gleichzeitig betrieben werden. Ein Kreislaufgas wird bei diesem Verfahren als Zwischenkälteträger benutzt. Die erforderliche Kälte wird letztlich von flüssigem Stickstoff aufgebracht. Einen Kältemittelverdampfer einer Kältemaschine weist dieser Kreislauf nicht auf. Das Kreislaufgas wird vielmehr in einem geschlossenen Kreislauf über einen einfachen Warmetauscher geführt, der nicht unter dem Verdampfungsdruck einer Kältemaschine steht. Das Kreislaufgas dient somit als reiner Zwischenkälteträger, zu dessen Kühlung eine zusätzliche externe Kälteerzeugung notwendig ist.

Der Erfindung liegt deshalb die Aufgabe zugrunde, ein Verfahren zur Rückgewinnung eines Lösungsmittels sowie eine Lösungsmittelkondensatoranordnung der angegebenen Gattung zu schaffen, bei der die oben erwähnten Nachteile nicht auftreten. Insbesondere soll eine Lösungsmittelkondensatoranordnung vorgeschlagen werden, bei der Betriebsstörungen durch Zuwachsen des Lösungsmittelkreislaufes sicher vermieden werden.

Dies wird erfindungsgemäß durch die im kennzeichnenden Teil des Anspruchs 1 sowie des Anspruchs 3 angegebenen Merkmale erreicht.

Zweckmäßige Ausführungsformen werden durch die Merkmale der Unteransprüche definiert.

Die mit der Erfindung erzielten Vorteile beruhen auf der Verwendung von zwei getrennten Lösungsmittelkondensatoren, die jeweils abwechselnd, also schichtweise, betrieben werden, so daß immer ein Lösungsmittelkondensator in Betrieb ist und der andere abgetaut werden kann, um auf diese Weise das Zuwachsen des Lösungsmittelkreislaufes durch Auskristallisieren des Lösungsmittels zu verhindern.

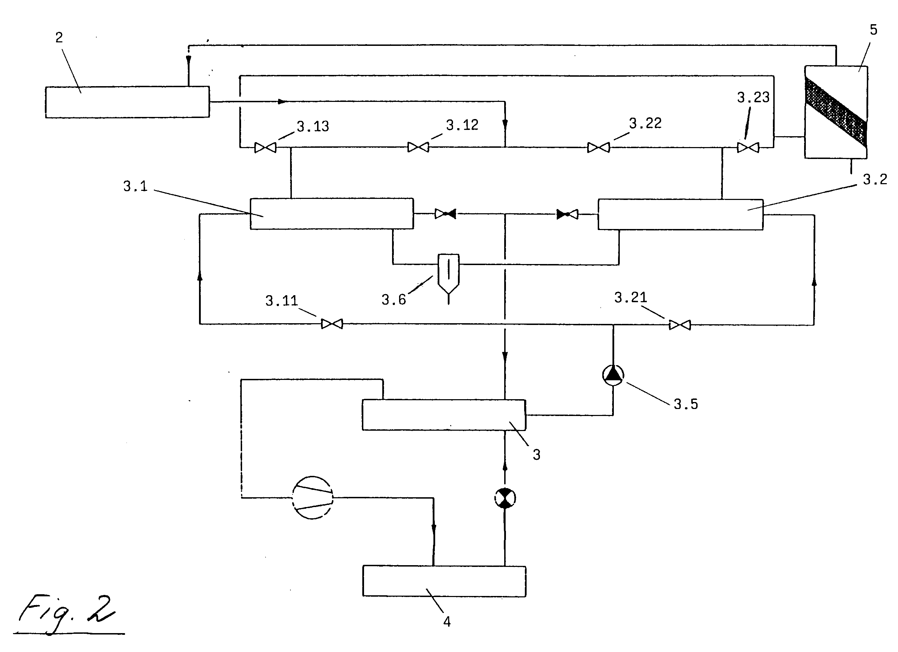

Die Erfindung wird im folgenden anhand eines Ausführungsbeispiels unter Bezugnahme auf die beiliegende Figur 2 näher erläutert, die schematisch den Aufbau einer solchen Lösungsmittelrückgewinnungsanlage zeigt. Dabei werden, soweit möglich, die gleichen Bezugszeichen wie in Figur 1 verwendet, so daß die entsprechenden Komponenten nicht nochmals beschrieben werden müssen. Der Trockner 1 mit den Schleusen 1a, 1b und der Stickstoffzuführung ist in Figur 2 nicht nochmals dargestellt.

Bei der Lösungsmittelrückgewinnungsanlage nach Figur 2 gelangt das Gemisch Lösungsmittel/Stickstoff in einen Kreislauf, der durch Ventile 3.12, 3.13, 3.22 und 3.23 unterbrochen werden kann. Dabei sind die beiden gemäß der Darstellung in Figur 2 linken Ventile 3.13 und 3.12 einem ersten Lösungsmittelkondensator 3.1 und die beiden gemäß der Darstellung in Figur 2 rechten Ventile 3.22 und 3.23 einem zweiten Lösungsmittelkondensator 3.2 zugeordnet. Die Einspeisung des Gemisches Lösungsmittel/Stickstoff in diesen Kreislauf erfolgt zwischen den beiden Ventilgruppen; jeder Lösungsmittelkondensator 3.1 und 3.2 ist wiederum zwischen seinen beiden zugehörigen Ventilen an den Kreislauf angeschlossen.

Zwischen den beiden Lösungsmittelkondensatoren 3.1 und 3.2 ist ein in beiden Strömungsrichtungen des Gasgemisches wirksamer Flüssigkeitsabscheider 3.6 zum Abfangen eines etwa auskondensierenden Lösungsmittels vorgesehen. Dieser Flüssigkeitsabscheider 3.6 ist an die beiden Kondensatoren 3.1 und 3.2 angeschlossen.

Die Auslässe der beiden Lösungsmittelkondensatoren 3.1 und 3.2 sind miteinander verbunden und an den Kältemittelverdampfer 3 der Kältemaschine 4 angeschlossen. Eine Pumpe 3.5 saugt das Gemisch Lösungsmittel/Stickstoff aus dem Kältemittelverdampfer 3 ab und führt es über ein Ventil 3.21 dem Lösungsmittelkondensator 3.2 bzw. über ein Ventil 3.11 dem Lösungsmittelkondensator 3.1 zu.

Das Zweiphasengemisch flüssiges Lösungsmittel/gereinigter Stickstoff strömt zum Abscheider 5, wo es auf die beschriebene Weise weiterverarbeitet wird.

Von den beiden Lösungsmittelkondensatoren 3.1 und 3.2 ist jeweils einer im Betrieb, während der andere abgetaut wird.

Wird beispielsweise der Lösungsmittelkondensator 3.1 abgetaut, so ist das Ventil 3.11 geschlossen, so daß die Pumpe 3.5 nur den Lösungsmittelkondensator 3.2 über das geöffnete Ventil 3.21 mit flüssigem Kältemittel von dem Kältemittelverdampfer 3 versorgt. Gleichzeitig werden die Ventile 3.12 und 3.23 geöffnet und die Ventile 3.22 und 3.13 gesperrt, wodurch der Lösungsmittelkondensator 3.1 mit dem Trägergas versorgt wird und damit die zu seinem Abtauen erforderliche Enthalpie empfängt.

Das Trägergas strömt dann über den Flüssigkeitsabscheider 3.6 zu dem im Betrieb befindlichen Lösungsmittelkondensator 3.2 und weiter über das geöffnete Ventil 3.23 zum Flüssigkeitsabscheider 5, wo die Weiterverarbeitung in der üblichen Weise erfolgt.

Zur Umkehrung dieser Funktionsweise wird das Ventil 3.11 geöffnet und das Ventil 3.21 geschlossen und die Ventile 3.12, 3.13, 3.22 und 3.23 entsprechend umgeschaltet, wodurch der Lösungsmittelkondensator 3.2 abgetaut und gleichzeitig der Lösungsmittelkondensator 3.1 in Betrieb genommen werden.

Durch diese "Tandemtechnik" wird also der Kältemittelverdampfer 3 von dem Lösungsmittelkondensator getrennt und gleichzeitig gewährleistet, daß durch das regelmäßige Abtauen, das ohne jede Unterbrechung des Betriebs erfolgt, das etwaige Erstarren von Lösungsmitteln nicht zu Betriebsstörungen führen kann.

## Patentansprüche

1. Verfahren zur Rückgewinnung eines Lösungsmittels aus einem Gemisch von inertem Trägergas und dem Lösungsmittel durch Kondensation des Lösungsmittels unter Verwendung von mindestens zwei Lösungsmittelkondensatoren (3.1, 3.2),
**dadurch gekennzeichnet, daß**
a) jeweils einer der beiden Lösungsmittelkondensatoren (3.1, 3.2) in Betrieb ist, während der andere abgetaut wird; und
b) jeweils der in Betrieb befindliche Lösungsmittelkondensator (3.1, 3.2) über eine Pumpe (3.5) aus einem unter Verdampfungsdruck stehenden Kältemittelverdampfer (3) einer Kältemaschine (4) mit flüssigem Kältemittel versorgt wird.

2. Verfahren nach Anspruch 1, dadurch gekennzeichnet, daß die Strömungsrichtung des Gemisches durch die Lösungsmittelkondensatoren (3.1, 3.2) gleichzeitig mit dem Wechsel zwischen Abtauen und Kondensieren umgeschaltet wird.

3. Lösungsmittelkondensatoranordnung für eine Anlage zur Rückgewinnung des Lösungsmittels aus einem Gemisch von inertem Trägergas, insbesondere Stickstoff, und dem Lösungsmittel,
a) mit mindestens zwei Lösungsmittelkondensatoren (3.1, 3.2) zur Kondensation des Lösungsmittels durch Kühlung gegen ein Kältemittel, wobei einer der beiden Lösungsmittelkondensatoren (3.1, 3.2) betrieben werden kann, während der andere abgetaut wird und
b) mit einer Pumpe (3.5) zur Förderung des Kältemittels,
**dadurch gekennzeichnet,** daß
c) eine Kältemaschine (4) mit einem unter Verdampfungsdruck stehenden Kältemittelverdampfer (3) vorgesehen ist, aus dem die Pumpe (3.5) das Kältemittel zu dem jeweils in Betrieb befindlichen Lösungsmittelkondensator (3.1 oder 3.2) fördert .

4. Lösungsmittelkondensatoranordnung nach Anspruch 3, dadurch gekennzeichnet, daß zwischen den Lösungsmittelkondensatoren (3.1, 3.2) ein in beiden Strömungsrichtungen wirksamer Flüssigkeitsabscheider (3.6) angeordnet ist.

5. Lösungsmittelkondensatoranordnung nach einem der Ansprüche 3 oder 4, dadurch gekennzeichnet, daß die beiden Lösungsmittelkondensatoren (3.1, 3.2) über Ventile (3.12, 3.13, 3.22, 3.23) einem Vorkühler (2) angeschlossen sind.

6. Lösungsmittelkondensatoranordnung nach einem der Ansprüche 3 bis 5, dadurch gekennzeichnet, daß der Kältemittelverdampfer (3) über Ventile (3.11, 3.21) an die Lösungsmittelkondensatoren (3.1, 3.2) angeschlossen ist.

7. Lösungsmittelkondensatoranordnung nach einem der Ansprüche 5 oder 6, dadurch gekennzeichnet, daß die Ventile jeweils gruppenweise betätigbar sind.

## Claims

1. A method for the recovery of a solvent from a mixture of inert carrier gas and said solvent by condensation of said solvent using at least two solvent condensers (3.1, 3.2),
**characterized in** that
a) respectively one of the two solvent condensers (3.1, 3.2) is in operation while the other is being defrosted; and
b) said solvent condenser (3.1, 3.2) respectively in operation is supplied with liquid refrigerant via a pump (3.5) from a refrigerant vaporizer (3) of a refrigerator, the vaporizer (3) being under vaporization pressure.

2. A method according to claim 1, **characterized in** that the flow direction of the mixture through the solvent condensers (3.1, 3.2) is switched simultaneously with the change between the defrosting and condensing.

3. A solvent condenser arrangement for an apparatus for the recovery of solvent from a mixture of inert carrier gas, in particular nitrogen, and said solvent, comprising
a) at least two solvent condensers (3.1, 3.2) for the condensation of said solvent by being cooled against a refrigerant, where one of the two solvent condensers (3.1, 3.2) being able to be operated while the other is defrosted, and
b) a pump (3.5) for the conveyance of the refrigerant,
**characterized in** that
c) a refrigerator (4) is provided having a refrigerant vaporizer (3) under vaporization pressure, from which the pump (3.5) conveys the refrigerant to the solvent condenser (3.1 or 3.2) being respectively in operation.

4. A solvent condenser arrangement according to claim 3, **characterized in** that between the solvent condensers (3.1, 3.2) a liquid separator (3.6) effective in both flow directions is disposed.

5. A solvent condenser arrangement according to one of the claims 3 or 4, **characterized in** that said two solvent condensers (3.1, 3.2) are connected to a precooler (2) via valves (3.12, 3.13, 3.22, 3.23).

6. A solvent condenser arrangement according to one of the claims 3 to 5, **characterized in** that said refrigerant vaporizer (3) is connected to the solvent condensers (3.1, 3.2) via valves (3.11, 3.21).

7. A solvent condenser arrangement according to one of the claims 5 or 6, **characterized in** that the valves are actuatable each in groups.

## Revendications

1. Procédé pour la récupération d'un solvant à partir d'un mélange d'un gaz de support inerte et du solvant par condensation du solvant en utilisant au moins deux condenseurs de solvant (3.1, 3.2) caractérisé en ce que
a) respectivement un des deux condenseurs de solvant (3.1, 3.2) est mis en service, tandis que l'autre est mis à dégeler; et
b) respectivement le condenseur de solvant mis en service (3.1, 3.2) est alimenté avec un réfrigérant liquide à l'intervention d'une pompe (3.5) à partir d'un évaporateur de réfrigérant (3) d'une machine frigorifique (4) soumis à une pression d'évaporation.

2. Procédé selon la revendication 1, caractérisé en ce que la direction d'écoulement du mélange à travers les condenseurs de solvant (3.1, 3.2) est commutée simultanément avec le changement entre le dégel et la condensation.

3. Agencement de condenseurs de solvant pour une installation destinée à la récupération du solvant à partir d'un mélange d'un gaz de support inerte, en particulier d'azote, et du solvant, comprenant
a) au moins deux condenseurs de solvant (3.1, 3.2) pour la condensation du solvant par réfrigération en contact avec un réfrigérant, un des deux condenseurs de réfrigérant (3.1, 3.2) pouvant être mis en service, tandis que l'autre est mis à dégeler, et
b) une pompe (3.5) pour l'alimentation du réfrigérant,
caractérisé en ce que
c) on prévoit une machine frigorifique (4) comprenant un évaporateur de réfrigérant (3) soumis à une pression d'évaporation, à partir duquel la pompe (3.5) transporte le réfrigérant aux condenseurs de solvant (3.1 ou 3.2) respectivement mis en service.

4. Agencement de condenseurs de solvant selon la revendication 3, caractérisé en ce que, entre les condenseurs de solvant (3.1, 3.2), est disposé un séparateur de liquide (3.6) actif dans les deux directions d'écoulement.

5. Agencement de condenseurs de solvant selon l'une quelconque des revendications 3 ou 4, caractérisé en ce que les deux condenseurs de solvant (3.1, 3.2) sont raccordés à un prérefroidisseur (2) à l'intervention de soupapes (3.12, 3.13, 3.22, 3.23).

6. Agencement de condenseurs de solvant selon l'une quelconque des revendications 3 à 5, caractérisé en ce que l'évaporateur de réfrigérant (3) est raccordé aux condenseurs de solvant (3.1, 3.2) à l'intervention de soupapes (3.11, 3.21).

7. Agencement de condenseurs de solvant selon l'une quelconque des revendications 5 ou 6, caractérisé en ce que les soupapes peuvent être mises en service par groupes, respectivement.
